# EUROPEAN PATENT APPLICATION

(11) **EP 4 570 857 A1**
(43) Date of publication of application: **18.06.2025**
(21) Application number: 23852985.3
(22) Date of filing: 09.08.2023
(51) Int. Cl.: C08L 33/00, C08L 75/04, C08L 101/00, C08J 5/18

(54) **COMPOSITION FOR COATING PROTECTING FILM**

(30) Priority: 11.08.2022 KR 20220100959
(71) Applicant: KCC Corporation, Seoul 06608 (KR)
(72) Inventor: JEONG, Da Eun, Yongin-si Gyeonggi-do 16993 (KR); CHO, Su Young, Yongin-si Gyeonggi-do 16989 (KR); PARK, Jong Yun, Yongin-si Gyeonggi-do 16891 (KR); CHOI, Yong Ho, Namyangju-si Gyeonggi-do 12216 (KR)
(74) Representative: Pfenning, Meinig & Partner mbB
(86) International application number: PCT/KR2023/011756
(87) International publication number: WO 2024/035116

(57) **Abstract**

The present invention relates to a composition for a coating protecting film comprising: an acrylic emulsion resin; a polyurethane dispersion; and a polyolefin resin, wherein the acrylic emulsion resin has a weight average molecular weight of 200,000 to 300,000 g/mol and a glass transition temperature of 50 to 80°C, and the polyurethane dispersion has a weight average molecular weight of 40,000 to 60,000 g/mol and a glass transition temperature of -70 to -20°C.

## Description

### [TECHNICAL FIELD]

The present disclosure relates to a composition for a coating protecting film that temporarily protects the painted surfaces of automobiles, heavy equipment, etc. and is easy to peel off.

### [BACKGROUND ART]

The present disclosure relates to a composition for a coating protecting film that protects the painted surfaces of automobiles, heavy equipment, etc. during temporary storage and is easy to peel off.

Automobiles, heavy equipment, etc. are likely to suffer from scratches, stains, discoloration, contamination, etc. on their painted surfaces when they are temporarily stored outdoors or transported until they are delivered to the final user, due to contaminants such as sand dust, iron, salts, alkalis, acids, smoke, insect waste or bodily fluids, sunlight, wind and rain, and other influences. In addition, there may be cases where physical forces cause damage to the material.

Therefore, many peelable coating compositions have been proposed that are applied to the surface in advance at the stage of product shipment in order to temporarily protect the surfaces of automobiles, heavy equipment, etc. from contaminants, sunlight, wind and rain, and scratches, and can be easily peeled off after a certain period of storage.

However, since it is necessary to use a petroleum-based solvent when removing them in the case of conventional coating compositions, there are environmental problems such as air pollution. In addition, compositions containing alkaline-soluble resins as their main components are also being used, but since alkaline detergents are used when removing them, there are problems of environmental pollution such as water pollution.

Therefore, in order to protect the coating surfaces of automobiles, heavy equipment, etc., the development of a composition for a coating protecting film that is easy to peel off and has excellent adhesive force is required.

### [Related Art Document]

### [Patent Document]

(Patent Document 1) Korean Patent No. 10-0498717 (2005.06.22.)

### [DETAILED DESCRIPTION OF INVENTION]

### [TECHNICAL PROBLEMS]

In one aspect, the present disclosure seeks to provide a composition for a coating protecting film that is easy to peel off and has excellent adhesive force in order to protect the coating surfaces of automobiles, heavy equipment, etc.

In another aspect, the present disclosure seeks to provide a coating protecting film manufactured from a composition for a coating protecting film that is easy to peel off and has excellent adhesive force in order to protect the coating surfaces of automobiles, heavy equipment, etc.

### [TECHNICAL SOLUTION]

In one aspect, the present disclosure may provide a composition for a coating protecting film, which comprises an acrylic emulsion resin, a polyurethane dispersion, and a polyolefin resin, wherein the acrylic emulsion resin has a weight average molecular weight of 200,000 to 300,000 g/mol and a glass transition temperature of 50 to 80°C, and the polyurethane dispersion has a weight average molecular weight of 40,000 to 60,000 g/mol and a glass transition temperature of -70 to -20°C.

In another aspect, the present disclosure may provide a coating protecting film manufactured by curing the composition for a coating protecting film according to the present disclosure.

### [EFFECT OF INVENTION]

The composition for a coating protecting film according to one aspect of the present disclosure is characterized in that it has a fast drying speed, it has excellent initial adhesion and adhesion retention, and the coating film can be removed cleanly and does not leave residue after removal.

### [MODE FOR CARRYING OUT THE INVENTION]

Hereinafter, the present disclosure will be described in more detail with reference to Examples.

In one aspect, the present disclosure may provide a composition for a coating protecting film that does not react with a body coating film, is easy to peel off, and has excellent adhesive force in order to protect the coating surfaces of automobiles, heavy equipment, etc.

A composition for a coating protecting film according to one specific example of the present disclosure may provide a composition for a coating protecting film, which comprises an acrylic emulsion resin, a polyurethane dispersion, and a polyolefin resin, wherein the acrylic emulsion resin has a weight average molecular weight of 200,000 to 300,000 g/mol and a glass transition temperature of 50 to 80°C, and the polyurethane dispersion has a weight average molecular weight of 40,000 to 60,000 g/mol and a glass transition temperature of -70 to -20°C.

As described above, when using an acrylic emulsion resin and a polyurethane dispersion having specific ranges of weight average molecular weight and glass transition temperature, there are effects of adjusting the drying speed and crosslinking density of the coating film to improve not only the appearance characteristics of the coating film but also the mechanical properties such as water resistance and solvent resistance thereof, and adjusting the surface tension of the composition to have appropriate adhesion without reacting with the body coating film, thereby protecting the coating film.

The composition for a coating protecting film of the present disclosure may further comprise one or more additives selected from the group consisting of a neutralizing agent, a solvent, a dispersant, a leveling agent, an antifoaming agent, a UV stabilizer, a pigment, a thickener, and a preservative.

Hereinafter, the above components will be described in detail.

### <Acrylic emulsion resin>

An acrylic emulsion resin serves to improve the storage properties and water resistance of a composition for a coating protecting film, and secure the strength and adhesion of a coating protecting film manufactured therefrom.

As the acrylic emulsion resin, one that is directly synthesized according to a known method may be used, or a commercially available product may be used. For example, the acrylic emulsion resin may include one or more monomer-derived units selected from the group consisting of allyl methacrylate (AMA), methyl methacrylate (MMA), ethyl acrylate (EA), ethyl methacrylate (EMA), hydroethyl acrylate (HEA), and methacrylic acid (MAA). As another example, the acrylic emulsion resin may be prepared from a mixture comprising allyl methacrylate (AMA), methyl methacrylate (MMA), ethyl acrylate (EA), ethyl methacrylate (EMA), hydroethyl acrylate (HEA), and methacrylic acid (MAA) as monomers.

In addition, the mixture may further comprise divalent acrylic monomers. The divalent acrylic monomers may include, for example, 1,4-butanediol diacrylate, 1,4-butanediol dimethacrylate, 1,5-pentanediol dimethacrylate, 1,6-hexanediol diacrylate, 1,6-hexanediol dimethacrylate, 1,9-nonanediol dimethacrylate, 1,10-decanediol dimethacrylate, ethylene glycol diacrylate, ethylene glycol dimethacrylate, etc.

The acrylic emulsion resin may have a viscosity at 25°C of 30 to 100 cps, or 50 to 80 cps. When the viscosity at 25°C of the acrylic emulsion resin is within the above range, the composition for a coating protecting film has an appropriate viscosity, thereby having an effect of improving workability. When the viscosity at 25°C of the acrylic emulsion resin is less than the above range, the viscosity of the composition is too low, which may cause problems such as poor formation of the manufactured coating film, resulting in poor paint flowability, adhesion, and scratch resistance, and when the viscosity exceeds the above range, the composition may have insufficient workability, thereby causing problems such as poor appearance characteristics of the manufactured coating film.

The acrylic emulsion resin may have a pH of 5 to 9, or 6 to 8. When the pH of the acrylic emulsion resin is within the above range, the composition for a coating protecting film has an appropriate viscosity, thereby having an effect of improving workability and improving storage stability. When the pH of the acrylic emulsion resin is less than the above range, the viscosity of the composition is too low, which may cause problems such as poor formation of the manufactured coating film, resulting in poor paint flowability, adhesion, and scratch resistance, and when the pH exceeds the above range, the composition may have insufficient workability, thereby causing problems such as poor appearance characteristics of the manufactured coating film.

The acrylic emulsion resin may have an acid value (Av) of 3 to 6 mg KOH/g, or 3.5 to 5.5 mg KOH/g. When the acid value of the acrylic emulsion resin is within the above range, the reactivity of the composition containing the acrylic emulsion resin may be adjusted to improve the appearance characteristics of the coating film manufactured therefrom. When the acid value of the acrylic emulsion resin is less than the above range, the resin stability is lowered, which may cause a problem of lowering the storability of the prepared coating composition, and when it exceeds the above range, the viscosity of the composition increases due to increased resin cohesion, which may cause a problem of lowering the workability and the water resistance of the coating film.

The acrylic emulsion resin may have a weight average molecular weight (Mw) of 200,000 to 300,000 g/mol, or 220,000 to 280,000 g/mol. When the weight average molecular weight of the acrylic emulsion resin is within the above range, the long-term physical properties such as durability, adhesion, hardness, and weather resistance of the manufactured coating film may be excellent. When the weight average molecular weight of the acrylic emulsion resin is less than the above range, the molecular weight is small, so that the water resistance, weather resistance, and scratch resistance of the manufactured coating film become insufficient, and when it exceeds the above range, the flowability is reduced due to the increase in molecular weight, so that the workability of the composition for a coating protecting film comprising it is poor, and the surface smoothness is poor, which may cause a problem that it is difficult to manufacture a coating film having an excellent appearance.

The acrylic emulsion resin may have a glass transition temperature (Tg) of 50 to 80°C, or 60 to 70°C. When the glass transition temperature of the acrylic emulsion resin is within the above range, it has appropriate adhesion without reaction with the next coating film, and has the effect of improving the hardness and solvent resistance of the coating film. When the glass transition temperature of the acrylic emulsion resin is less than the above range, the drying speed and crosslinking density of the coating film are reduced, which causes problems in that the hardness and solvent resistance of the manufactured coating film are insufficient, and when it exceeds the above range, the coating film becomes brittle, which may cause the appearance characteristics and chipping resistance of the manufactured coating film to be insufficient.

In addition, the acrylic emulsion resin may be in the form of an emulsion dispersed in deionized water. For example, the acrylic emulsion is in the form of an emulsion dispersed in deionized water, and may have an average diameter of 150 to 300 nm, or 180 to 260 nm. When the acrylic emulsion resin is in the form of an emulsion dispersed in deionized water, it has the effect that is capable of lowering the content of volatile organic compounds (VOC) of the paint, and when the average diameter is within the above range, the appearance and particle stability are good.

The acrylic emulsion resin may be contained in the composition in an amount of 30 to 50% by weight, or 35 to 45% by weight, based on the total weight of the composition for a coating protecting film. When the acrylic emulsion resin is contained within the above content range, it has the effect of improving the adhesion, durability, hardness, and scratch resistance of the coating film. When the content of the acrylic emulsion resin is less than the above range, the drying property is reduced, which causes a problem in that the adhesion, gloss, hardness, and durability of the coating film are reduced, and when it exceeds the above range, the drying progresses quickly, which causes the painting workability and paint flowability of the composition to be insufficient, which may cause a problem in that the appearance and scratch resistance of the coating film are reduced, and the residual amount after the coating film is removed increases.

### <Polyurethane dispersion>

The polyurethane dispersion used in the composition for a coating protecting film of the present disclosure serves to improve the adhesion of the composition and enhance flexibility and tensile strength.

The polyurethane dispersion may be prepared by reacting a polyol, a diisocyanate, and an acid. At this time, the polyol may be one or more selected from the group consisting of 1,6-hexanediol, ethylene glycol, propylene glycol, diethylene glycol, butylene glycol, neopentyl glycol, trimethylolpropane, butanediol, 1,4-hexanediol, and 3-methylpentanediol, and the diisocyanate may be one or more selected from the group consisting of isophorone diisocyanate, trimethylene diisocyanate, tetramethylene diisocyanate, pentamethylene diisocyanate, hexamethylene diisocyanate, propylene diisocyanate, ethylene diisocyanate, 2,3-dimethylethylene diisocyanate, 1-methyl trimethylene diisocyanate, 1,3-cyclopentene diisocyanate, 1,4-cyclopentene diisocyanate, 1,2-cyclopentene diisocyanate, 1,3-phenylenediisocyanate, 1,4-phenylenediisocyanate, 2,4-toluene diisocyanate, 2,6-toluene diisocyanate, oligomeric isocyanates, isophorone diisocyanate, 4,4-diphenylpropane diisocyanate, xylene diisocyanate, and 1,1,6,6-tetramethylhexamethylene diisocyanate. In addition, the acid may be one or more selected from the group consisting of adipic acid, dimethylolpropionic acid, phthalic acid, isophthalic acid, terephthalic acid, tetrahydrophthalic acid, hexahydrophthalic acid, adipic acid, fumaric acid, maleic acid, trimellitic acid, malic acid, sulfonic acid, and aconitic acid. Meanwhile, the polyurethane dispersion is a form in which a polyurethane resin is dispersed in a solvent, and for example, the polyurethane dispersion may be a dispersion dispersed in deionized water.

Meanwhile, an aqueous medium for dispersing the polyurethane resin may be a water solvent or a mixed medium of water and a hydrophilic organic solvent. For example, the water solvent may be water, ion-exchanged water, distilled water, ultrapure water, etc. In particular, ion-exchanged water may be used to prevent particles from becoming unstable due to the ease of obtaining water or the influence of salts. In addition, the hydrophilic organic solvent may be a lower monohydric alcohol such as methanol, ethanol, propanol, etc., a polyhydric alcohol such as ethylene glycol, glycerin, etc., or an aprotic hydrophilic organic solvent such as N-methylmorpholine, dimethyl sulfoxide, dimethyl formamide, etc.

The polyurethane dispersion may have a solid content (NV) of 30 to 50% by weight or 35 to 45% by weight based on the total weight of the dispersion. When the solid content of the polyurethane dispersion is within the above range, the storage stability of the resin and the storage stability of the composition for a coating protecting film may be improved, and the workability may be excellent. When the solid content of the polyurethane dispersion is less than the above range, the viscosity becomes too low, which causes a problem in that the workability of the composition for a coating protecting film containing the same becomes insufficient, and when it exceeds the above range, the viscosity of the polyurethane dispersion becomes too high, which reduces stability during reaction, and the dispersion stability deteriorates, which may cause agglomeration over time.

The polyurethane dispersion may have a viscosity at 25°C of 10 to 300 cps, or 20 to 250 cps. When the viscosity at 25°C of the polyurethane dispersion is within the above range, the composition for a coating protecting film has an appropriate viscosity, thereby having an effect of improving workability. When the viscosity at 25°C of the polyurethane dispersion is less than the above range, the viscosity of the composition is too low, which may result in non-formation of the manufactured coating film, thereby having a problem of reducing the paint flowability, adhesion, and scratch resistance, and when the viscosity exceeds the above range, the composition may have insufficient workability, thereby having a problem of reducing the appearance characteristics of the manufactured coating film.

The polyurethane dispersion may have a pH of 6 to 8, or 6.3 to 7.7. When the pH of the polyurethane dispersion is within the above range, the composition for a coating protecting film has an appropriate viscosity, thereby having an effect of improving workability. When the pH of the polyurethane dispersion is less than the above range, the viscosity of the composition is too low, which may result in non-formation of the manufactured coating film, thereby having a problem of reducing the paint flowability, adhesion, and scratch resistance, and when the pH exceeds the above range, the composition may have insufficient workability, thereby having a problem of reducing the appearance characteristics of the manufactured coating film.

The polyurethane dispersion may have a weight average molecular weight (Mw) of 40,000 to 60,000 g/mol, or 45,000 to 55,000 g/mol. When the weight average molecular weight of the polyurethane dispersion is within the above range, the smoothness of the composition for a coating protecting film is improved, and a soft coating film is formed, thereby having an effect of improving the adhesion and wear resistance with the body coating film. When the weight average molecular weight of the polyurethane dispersion is less than the above range, there is a problem in that the mechanical properties of the manufactured coating film are deteriorated due to the small molecular weight, and when it exceeds the above range, the flowability is reduced due to the increase in molecular weight, and the coating film becomes brittle, which may cause problems of reducing smoothness and lowering scratch resistance.

The polyurethane dispersion may have a glass transition temperature (Tg) of -70 to - 20°C, or -60 to -30°C. When the glass transition temperature of the polyurethane dispersion is within the above range, there is an effect of improving the flexibility and hardness of the coating film. When the glass transition temperature of the polyurethane dispersion is less than the above range, the drying speed of the composition for a coating protecting film is delayed, which causes problems in that the solvent resistance and chipping resistance of the manufactured coating film are insufficient, and when it exceeds the above range, the coating film becomes brittle, which may result in insufficient appearance characteristics and hardness of the coating film.

The polyurethane dispersion may be contained in the composition in an amount of 20 to 30% by weight, or 22 to 28% by weight, based on the total weight of the composition for a coating protecting film. When the polyurethane dispersion is contained within the above content range, it has the effect of improving tensile strength, flexibility, elongation, adhesion, wear resistance, scratch resistance, and coating film smoothness. When the content of the polyurethane dispersion in the composition is less than the above range, flexibility is reduced, which causes problems of reducing tensile strength and scratch resistance, and when it exceeds the above range, the viscosity of the composition becomes excessively high to reduce workability and drying properties, which may cause problems of reducing appearance and mechanical properties.

### <Polyolefin resin>

The polyolefin resin may increase the surface tension of the composition for a coating protecting film, thereby providing appropriate adhesion to a body coating film and excellent detachability that allows the coating film to be cleanly removed without reacting with the body coating film.

The polyolefin resin may include high-density polyethylene (HDPE), low-density polyethylene (LDPE), linear low-density polyethylene (LLDPE), ethylene-propylene copolymers, metallocene-polyethylene, polypropylene homopolymers, polypropylene copolymers, metallocene-polypropylene, and property-enhanced composite resins of the polypropylene homopolymers and copolymers.

Meanwhile, the polyolefin resin may include, for example, polymers that are halogenated or modified to include a carboxyl group, preferably polyethylene, polypropylene, polybutadiene, polyisoprene, polystyrene, or a copolymer of any two or more thereof. The polyolefin resin may also be modified with a resin such as a maleic resin. In one specific example, the (modified) polyolefin may include one or more selected from a halogenated polyolefin maleic acid copolymer such as a chlorinated polypropylene maleic resin, a polyolefin maleic acid copolymer, styrene/ethylene-butylene, styrene/butadiene, styrene/ethylene-propylene, or styrene/isoprene copolymer. Suitable polyolefins are commercially available from Toyobo Co, Ltd under the trade names Hardlen^{®}NZ-1004, Hardlen^{®}NZ-1015, Hardlen^{®}EH-801J and Hardlen^{®}CY-9124/9122, and from KRATON Performance Polymers Inc under the trade names Kraton^{®}G1643E and Kraton^{®}G1640ES.

The polyolefin resin may have a solid content (NV) of 20 to 40% by weight, or 25 to 35% by weight, based on the total weight of the dispersion. When the solid content of the polyolefin resin is within the above range, the storage stability of the resin and the storage stability of the composition for a coating protecting film may be improved, and the workability may be excellent. When the solid content of the polyolefin resin is less than the above range, the viscosity becomes excessively low, which causes a problem in that the workability of the composition for a coating protecting film containing the same becomes insufficient, and when it exceeds the above range, the viscosity of the polyolefin resin becomes excessively high, which reduces stability during reaction, and the dispersion stability deteriorates, which may cause agglomeration over time.

The polyolefin resin may have a viscosity at 25°C of 10 to 250 cps, or 20 to 200 cps. When the viscosity at 25°C of the polyolefin resin is within the above range, the viscosity of the composition for a coating protecting film is appropriate, thereby having an effect of improving workability. When the viscosity at 25°C of the polyolefin resin is less than the above range, the viscosity of the composition is too low, which causes problems of reducing paint flowability, adhesion, and scratch resistance due to non-formation of the manufactured coating film, and when the viscosity exceeds the above range, the workability of the composition is insufficient, which may cause problems of reducing appearance characteristics of the manufactured coating film.

The polyolefin resin may have a pH of 6 to 8, or 6.3 to 7.7. When the pH of the polyolefin resin is within the above range, the viscosity of the composition for a coating protecting film is appropriate, thereby having an effect of improving workability. When the pH of the polyolefin resin is less than the above range, the viscosity of the composition is too low, which causes problems of reducing paint flowability, adhesion, and scratch resistance due to non-formation of the manufactured coating film, and when the pH exceeds the above range, the workability of the composition is insufficient, which may cause problems of reducing appearance characteristics of the manufactured coating film.

The polyolefin resin may have a weight average molecular weight (Mw) of 70,000 to 90,000 g/mol, or 75,000 to 85,000 g/mol. When the weight average molecular weight of the polyolefin resin is within the above range, the smoothness of the composition for a coating protecting film is improved, and a soft coating film is formed, thereby having appropriate adhesion to the body coating film to have an effect of improving scratch resistance and hardness. When the weight average molecular weight of the polyolefin resin is less than the above range, there is a problem in that the mechanical properties of the manufactured coating film are deteriorated due to the small molecular weight, and when it exceeds the above range, the flowability is reduced due to the increase in molecular weight, so that the coating film may become brittle, thereby deteriorating the smoothness and scratch resistance, and causing a problem that the residual amount after the coating film is removed increases.

The polyolefin resin may be contained in an amount of 25 to 40% by weight, or 28 to 36% by weight, based on the total weight of the composition for a coating protecting film. When the polyolefin resin is contained in an amount within the above range, the adhesion may be excellent, and discoloration of the pigment may be prevented to have excellent appearance and maintain appropriate peeling properties. When the polyolefin resin is contained in an amount less than the above range, the adhesion is reduced, and a problem of an increased amount of residue after coating film removal may occur, and when the polyolefin resin is contained in an amount exceeding the above range, the compatibility with other components and the physical properties of the composition for a coating protecting film may be reduced.

The acrylic emulsion resin and the polyolefin resin may be mixed at a weight ratio of 1:0.7 to 1, for example, a weight ratio of 1:0.75 to 0.95.

When the mixing ratio of the acrylic emulsion resin and the polyolefin resin falls within the above-mentioned range, the appropriate drying properties is maintained, the appropriate adhesion to the body coating film is provided, and the coating film may be cleanly removed without residue after removal.

### <Solvent>

The solvent includes water as the basic solvent, and may additionally include an organic solvent. The water solvent may be ion-exchanged water, distilled water, ultrapure water, etc. In addition, the organic solvent is one that can increase storage stability and provide quick-drying properties and the function of an adhesive, and is not particularly limited as long as it does not cause problems in the preparation of the composition for a coating protecting film, and may be an alcohol-based solvent such as butyl cellosolve, butyl carbitol, n-propanol, isopropanol, n-butanol, isobutanol, tert-butanol, etc.

The solvent may be contained in an amount of 0.5 to 5% by weight based on the total weight of the composition for a coating protecting film. When the solvent is used in an amount within the above range, viscosity control may be facilitated, and the smoothness and painting workability of the coating protecting film using the composition for a coating protecting film may be excellent.

### <Additive>

An additive may be added in a predetermined content range and contained in the composition for a coating protecting film for the purpose of exerting additional effects for improving wettability, leveling properties, etc. during painting. For example, the additive may include a neutralizer, a dispersant, a leveling agent, an antifoaming agent, a UV stabilizer, a pigment, a thickener, and a preservative.

The additive may be contained in an amount of 1 to 3% by weight, or 1.5 to 2.5% by weight, based on the total weight of the composition for a coating protecting film. When the additive is used in an amount within the above range, the composition for a coating protecting film may be excellently maintained in storage stability, etc.

In another aspect, the present disclosure may provide a coating protecting film manufactured from a composition for a coating protecting film that is easy to peel off and has excellent adhesive force in order to protect coating surfaces of automobiles, heavy equipment, etc.

The coating protecting film of the present disclosure may be manufactured by curing the composition for a coating protecting film of the present disclosure.

Specifically, the composition for a coating protecting film of the present disclosure may be applied onto a substrate with a thickness of 10 to 100 µm by a method of spray, brush, or roller, and then cured by room temperature drying, oven curing, or IR lamp to form a coating protecting film.

Hereinafter, the present disclosure will be described in more detail through Examples.

However, these Examples are only intended to aid in the understanding of the present disclosure, and the scope of the present disclosure is not limited to these Examples in any sense.

### Examples

As the compositions shown in Tables 1 to 3 below, compositions for a coating protecting film were prepared through a process of sequentially adding a solvent and an additive while stirring it after adding a resin.

### Comparative Examples

As the compositions shown in Tables 4 and 5 below, compositions for a coating protecting film were prepared through a process of sequentially adding a solvent and an additive while stirring it after adding a resin.

**[Table 1]**

| Components (% by weight) | Examples | | | | | | |
|---|---|---|---|---|---|---|---|
| | 1 | 2 | 3 | 4 | 5 | 6 | 7 |
| Acrylic emulsion resin-1 | 38 | 32 | 46 | 26 | 55 | 42 | 35 |
| Acrylic emulsion resin-2 | | | | | | | |
| Acrylic emulsion resin-3 | | | | | | | |
| Acrylic emulsion resin-4 | | | | | | | |
| Acrylic emulsion resin-5 | | | | | | | |
| Acrylic emulsion resin-6 | | | | | | | |
| Acrylic emulsion resin-7 | | | | | | | |
| Acrylic emulsion resin-8 | | | | | | | |
| Acrylic emulsion resin-9 | | | | | | | |
| Polyurethane dispersion-1 | 25 | 25 | 25 | 25 | 25 | 21 | 28 |
| Polyurethane dispersion-2 | | | | | | | |
| Polyurethane dispersion-3 | | | | | | | |
| Polyurethane dispersion-4 | | | | | | | |
| Polyurethane dispersion-5 | | | | | | | |
| Polyurethane dispersion-6 | | | | | | | |
| Polyurethane dispersion-7 | | | | | | | |
| Polyurethane dispersion-8 | | | | | | | |
| Polyurethane dispersion-9 | | | | | | | |
| Polyolefin resin | 33 | 39 | 25 | 45 | 16 | 33 | 33 |
| Dispersant | 1 | 1 | 1 | 1 | 1 | 1 | 1 |
| Antifoaming agent | 0.6 | 0.6 | 0.6 | 0.6 | 0.6 | 0.6 | 0.6 |
| Pigment | 0.2 | 0.2 | 0.2 | 0.2 | 0.2 | 0.2 | 0.2 |
| UV stabilizer | 0.2 | 0.2 | 0.2 | 0.2 | 0.2 | 0.2 | 0.2 |
| Solvent | 2 | 2 | 2 | 2 | 2 | 2 | 2 |
| Total | 100 | 100 | 100 | 100 | 100 | 100 | 100 |

**[Table 2]**

| Components (% by weight) | Examples | | | | | | |
|---|---|---|---|---|---|---|---|
| | 8 | 9 | 10 | 11 | 12 | 13 | 14 |
| Acrylic emulsion resin-1 | 46 | 31 | | | | | 38 |
| Acrylic emulsion resin-2 | | | 38 | | | | |
| Acrylic emulsion resin-3 | | | | 38 | | | |
| Acrylic emulsion resin-4 | | | | | | | |
| Acrylic emulsion resin-5 | | | | | | | |
| Acrylic emulsion resin-6 | | | | | 38 | | |
| Acrylic emulsion resin-7 | | | | | | 38 | |
| Acrylic emulsion resin-8 | | | | | | | |
| Acrylic emulsion resin-9 | | | | | | | |
| Polyurethane dispersion-1 | 17 | 32 | 25 | 25 | 25 | 25 | |
| Polyurethane dispersion-2 | | | | | | | 25 |
| Polyurethane dispersion-3 | | | | | | | |
| Polyurethane dispersion-4 | | | | | | | |
| Polyurethane dispersion-5 | | | | | | | |
| Polyurethane dispersion-6 | | | | | | | |
| Polyurethane dispersion-7 | | | | | | | |
| Polyurethane dispersion-8 | | | | | | | |
| Polyurethane dispersion-9 | | | | | | | |
| Polyolefin resin | 33 | 33 | 33 | 33 | 33 | 33 | 33 |
| Dispersant | 1 | 1 | 1 | 1 | 1 | 1 | 1 |
| Antifoaming agent | 0.6 | 0.6 | 0.6 | 0.6 | 0.6 | 0.6 | 0.6 |
| Pigment | 0.2 | 0.2 | 0.2 | 0.2 | 0.2 | 0.2 | 0.2 |
| UV stabilizer | 0.2 | 0.2 | 0.2 | 0.2 | 0.2 | 0.2 | 0.2 |
| Solvent | 2 | 2 | 2 | 2 | 2 | 2 | 2 |
| Total | 100 | 100 | 100 | 100 | 100 | 100 | 100 |

**[Table 3]**

| Components (% by weight) | Examples | | | | | | |
|---|---|---|---|---|---|---|---|
| | 15 | 16 | 17 | 18 | 19 | 20 | 21 |
| Acrylic emulsion resin-1 | 38 | 38 | 38 | 38 | 38 | 38 | 38 |
| Acrylic emulsion resin-2 | | | | | | | |
| Acrylic emulsion resin-3 | | | | | | | |
| Acrylic emulsion resin-4 | | | | | | | |
| Acrylic emulsion resin-5 | | | | | | | |
| Acrylic emulsion resin-6 | | | | | | | |
| Acrylic emulsion resin-7 | | | | | | | |
| Acrylic emulsion resin-8 | | | | | | | |
| Acrylic emulsion resin-9 | | | | | | | |
| Polyurethane dispersion-1 | | | | 30 | 20 | 42 | 13 |
| Polyurethane dispersion-2 | | | | | | | |
| Polyurethane dispersion-3 | 25 | | | | | | |
| Polyurethane dispersion-4 | | | | | | | |
| Polyurethane dispersion-5 | | | | | | | |
| Polyurethane dispersion-6 | | 25 | | | | | |
| Polyurethane dispersion-7 | | | 25 | | | | |
| Polyurethane dispersion-8 | | | | | | | |
| Polyurethane dispersion-9 | | | | | | | |
| Polyolefin resin | 33 | 33 | 33 | 27 | 38 | 16 | 45 |
| Dispersant | 1 | 1 | 1 | 1 | 1 | 1 | 1 |
| Antifoaming agent | 0.6 | 0.6 | 0.6 | 0.6 | 0.6 | 0.6 | 0.6 |
| Pigment | 0.2 | 0.2 | 0.2 | 0.2 | 0.2 | 0.2 | 0.2 |
| UV stabilizer | 0.2 | 0.2 | 0.2 | 0.2 | 0.2 | 0.2 | 0.2 |
| Solvent | 2 | 2 | 2 | 3 | 2 | 2 | 2 |
| Total | 100 | 100 | 100 | 100 | 100 | 100 | 100 |

**[Table 4]**

| Components (% by weight) | Comparative Examples | | | | | |
|---|---|---|---|---|---|---|
| | 1 | 2 | 3 | 4 | 5 | 6 |
| Acrylic emulsion resin-1 | | 50 | 60 | | | |
| Acrylic emulsion resin-2 | | | | | | |
| Acrylic emulsion resin-3 | | | | | | |
| Acrylic emulsion resin-4 | | | | 38 | | |
| Acrylic emulsion resin-5 | | | | | 38 | |
| Acrylic emulsion resin-6 | | | | | | |
| Acrylic emulsion resin-7 | | | | | | |
| Acrylic emulsion resin-8 | | | | | | 38 |
| Acrylic emulsion resin-9 | | | | | | |
| Polyurethane dispersion-1 | 40 | | 36 | 25 | 25 | 25 |
| Polyurethane dispersion-2 | | | | | | |
| Polyurethane dispersion-3 | | | | | | |
| Polyurethane dispersion-4 | | | | | | |
| Polyurethane dispersion-5 | | | | | | |
| Polyurethane dispersion-6 | | | | | | |
| Polyurethane dispersion-7 | | | | | | |
| Polyurethane dispersion-8 | | | | | | |
| Polyurethane dispersion-9 | | | | | | |
| Polyolefin resin | 56 | 46 | | 33 | 33 | 33 |
| Dispersant | 1 | 1 | 1 | 1 | 1 | 1 |
| Antifoaming agent | 0.6 | 0.6 | 0.6 | 0.6 | 0.6 | 0.6 |
| Pigment | 0.2 | 0.2 | 0.2 | 0.2 | 0.2 | 0.2 |
| UV stabilizer | 0.2 | 0.2 | 0.2 | 0.2 | 0.2 | 0.2 |
| Solvent | 2 | 2 | 2 | 2 | 2 | 2 |
| Total | 100 | 100 | 100 | 100 | 100 | 100 |

**[Table 5]**

| Components (% by weight) | Comparative Examples | | | | |
|---|---|---|---|---|---|
| | 7 | 8 | 9 | 10 | 11 |
| Acrylic emulsion resin-1 | | 38 | 38 | 38 | 38 |
| Acrylic emulsion resin-2 | | | | | |
| Acrylic emulsion resin-3 | | | | | |
| Acrylic emulsion resin-4 | | | | | |
| Acrylic emulsion resin-5 | | | | | |
| Acrylic emulsion resin-6 | | | | | |
| Acrylic emulsion resin-7 | | | | | |
| Acrylic emulsion resin-8 | | | | | |
| Acrylic emulsion resin-9 | 38 | | | | |
| Polyurethane dispersion-1 | 25 | | | | |
| Polyurethane dispersion-2 | | | | | |
| Polyurethane dispersion-3 | | | | | |
| Polyurethane dispersion-4 | | 25 | | | |
| Polyurethane dispersion-5 | | | 25 | | |
| Polyurethane dispersion-6 | | | | | |
| Polyurethane dispersion-7 | | | | | |
| Polyurethane dispersion-8 | | | | 25 | |
| Polyurethane dispersion-9 | | | | | 25 |
| Polyolefin resin | 33 | 33 | 33 | 33 | 33 |
| Dispersant | 1 | 1 | 1 | 1 | 1 |
| Antifoaming agent | 0.6 | 0.6 | 0.6 | 0.6 | 0.6 |
| Pigment | 0.2 | 0.2 | 0.2 | 0.2 | 0.2 |
| UV stabilizer | 0.2 | 0.2 | 0.2 | 0.2 | 0.2 |
| Solvent | 2 | 2 | 2 | 2 | 2 |
| Total | 100 | 100 | 100 | 100 | 100 |

Specific components used in the preparation of the compositions for coating protecting films of Tables 1 to 5 are shown in Table 6 below.

**[Table 6]**

| Classification | Physical properties, or manufacturer and product name |
|---|---|
| Acrylic emulsion resin-1 | Tg 68°C, Mw 245,000g/mol, Av 4.7mgKOH/g, NV 24% by weight, Viscosity(25°C) 65cps |
| Acrylic emulsion resin-2 | Tg 68°C, Mw 212,000g/mol, Av 4.7mgKOH/g, NV 24% by weight, Viscosity(25°C) 62cps |
| Acrylic emulsion resin-3 | Tg 68°C, Mw 285,000g/mol, Av 4.7mgKOH/g, NV 24% by weight, Viscosity(25°C) 78cps |
| Acrylic emulsion resin-4 | Tg 68°C, Mw 185,000g/mol, Av 4.7mgKOH/g, NV 24% by weight, Viscosity(25°C) 45cps |
| Acrylic emulsion resin-5 | Tg 68°C, Mw 320,000g/mol, Av 4.7mgKOH/g, NV 24% by weight, Viscosity(25°C) 83cps |
| Acrylic emulsion resin-6 | Tg 55°C, Mw 245,000g/mol, Av 4.7mgKOH/g, NV 24% by |
| | weight, Viscosity(25°C) 65cps |
| Acrylic emulsion resin-7 | Tg 74°C, Mw 245,000g/mol, Av 4.7mgKOH/g, NV 24% by weight, Viscosity(25°C) 65cps |
| Acrylic emulsion resin-8 | Tg 47°C, Mw 245,000g/mol, Av 4.7mgKOH/g, NV 24% by weight, Viscosity(25°C) 65cps |
| Acrylic emulsion resin-9 | Tg 85°C, Mw 245,000g/mol, Av 4.7mgKOH/g, NV 24% by weight, Viscosity(25°C) 65cps |
| Polyurethane dispersion-1 | Tg -55°C, Mw 49,200g/mol, NV 42% by weight, Viscosity(25°C) 130cps |
| Polyurethane dispersion-2 | Tg -55°C, Mw 41,300g/mol, NV 42% by weight, Viscosity(25°C) 117cps |
| Polyurethane dispersion-3 | Tg -55°C, Mw 57,200g/mol, NV 42% by weight, Viscosity(25°C) 153cps |
| Polyurethane dispersion-4 | Tg -55°C, Mw 37,500g/mol, NV 42% by weight, Viscosity(25°C) 112cps |
| Polyurethane dispersion-5 | Tg -55°C, Mw 61,700g/mol, NV 42% by weight, Viscosity(25°C) 169cps |
| Polyurethane dispersion-6 | Tg -63°C, Mw 49,200g/mol, NV 42% by weight, Viscosity(25°C) 130cps |
| Polyurethane dispersion-7 | Tg -25°C, Mw 49,200g/mol, NV 42% by weight, Viscosity(25°C) 130cps |
| Polyurethane dispersion-8 | Tg -75°C, Mw 49,200g/mol, NV 42% by weight, Viscosity(25°C) 130cps |
| Polyurethane dispersion-9 | Tg -13°C, Mw 49,200g/mol, NV 42% by weight, Viscosity(25°C) 130cps |
| Polyolefin resin | Mw 80,500g/mol, NV 40% by weight, Viscosity(25°C) 115cps |
| Dispersant | SURFYNOL 107L Surfactant |
| Antifoaming agent | HYDROPALAT^{®} FL 3635 |
| Pigment | Titanium Dioxide |
| UV stabilizer | TINUVIN 292 |
| Solvent | DI-Water |

### Experimental Example

The coating protecting films manufactured using the compositions for a coating protecting film of the Examples and Comparative Examples which were prepared by mixing as the compositions in Tables 1 to 5 were subjected to physical property evaluation by the following method, and the results are shown in Tables 7 to 8 below.

### Painting method

The composition prepared in each Example and Comparative Example was applied onto the substrate on which the automobile clear coat was painted with a coating film thickness of 30 µm by a spray method, and then cured at 80°C for 3 minutes to form a film.

### Property evaluation

1) Drying properties: The touch-drying time was measured when the paint did not rub off when the painted specimen was briefly touched by the index finger. As a result of the measurement, if the touch-drying time was 2 minutes or more to 7 minutes or less, it was evaluated as satisfying the mechanical properties for the coating protecting film.
2) Adhesion, residual amount: The paint composition was applied, dried at room temperature for 24 hours, and then left at 70°C for one week. After that, the composition was left at room temperature for one hour, and then the adhesion test and the amount of residue were measured using an Instron machine. As a result of the measurement, if the adhesive force is 0.4 kg/inch or more to 1.5 kg/inch or less, it was evaluated as satisfying the adhesive force for the coating protecting film.
3) Solvent resistance: Each of isopropyl alcohol, ethanol, and methyl ethyl ketone was applied to the coating layer surface in an amount of 0.1 ml, left for 5 minutes, and then the solvent resistance was checked. If the coating layer surface did not change when it was viewed with the naked eye, it was evaluated as excellent (⊚), and if the coating layer surface was swelled, cracked, torn, or changed in color, it was evaluated as good (∘), average (△), and poor (X).
4) Water resistance: The completed coating film was immersed in a 40°C constant temperature bath for 10 days, and then an attachment test and appearance evaluation were performed. If there were no blisters and no peeling at all, it was evaluated as excellent (⊚), if there were no blisters and some peeling occurred along the scale mark, it was evaluated as good (∘), if there were no blisters and 1/4 or less of one side was peeled, it was evaluated as average (△), and if blisters occurred or 1/4 or more of one side was peeled, it was evaluated as poor (X).

**[Table 7]**

| Classification | Drying properties (minutes) | Adhesive force (kg/inch) | Residual amount (g/m²) | Solvent resistance | Water resistance |
|---|---|---|---|---|---|
| Examples 1 | 3 min | 0.8 | 0.05 | ⊚ | ⊚ |
| Examples 2 | 4 min | 0.7 | 0.07 | ○ | ⊚ |
| Examples 3 | 3 min | 0.9 | 0.08 | ⊚ | ⊚ |
| Examples 4 | 5 min | 0.8 | 0.07 | △ | △ |
| Examples 5 | 2 min | 1.3 | 0.12 | △ | ⊚ |
| Examples 6 | 4 min | 0.9 | 0.06 | ○ | ⊚ |
| Examples 7 | 5 min | 0.8 | 0.06 | ○ | ○ |
| Examples 8 | 4 min | 1.2 | 0.06 | △ | ○ |
| Examples 9 | 7 min | 1.3 | 0.06 | △ | △ |
| Examples 10 | 3 min | 0.8 | 0.05 | ○ | ○ |
| Examples 11 | 5 min | 1.5 | 0.05 | ⊚ | ⊚ |
| Examples 12 | 5 min | 0.9 | 0.2 | ○ | ○ |
| Examples 13 | 4 min | 1.3 | 0.7 | ○ | ⊚ |
| Examples 14 | 4 min | 0.9 | 0.08 | ○ | ○ |
| Examples 15 | 5 min | 1.1 | 0.11 | ○ | ⊚ |
| Examples 16 | 5 min | 0.8 | 0.11 | ○ | ○ |
| Examples 17 | 4 min | 1.1 | 0.09 | ⊚ | ○ |
| Examples 18 | 4 min | 1.2 | 0.07 | ○ | ⊚ |
| Examples 19 | 5 min | 0.5 | 0.04 | ○ | ○ |
| Examples 20 | 4 min | 1.1 | 0.07 | △ | ⊚ |
| Examples 21 | 7 min | 0.4 | 0.03 | △ | △ |

**[Table 8]**

| Classification | Drying properties (minutes) | Adhesive force (kg/inch) | Residual amount (g/m²) | Solvent resistance | Water resistance |
|---|---|---|---|---|---|
| Comparative Examples 1 | 15 min | 1.9 | 1.1 | X | △ |
| Comparative Examples 2 | 12 min | 2.9 | 1.3 | X | ○ |
| Comparative Examples 3 | 9 min | 3.1 | 1.9 | X | X |
| Comparative Examples 4 | 5 min | 0.8 | 0.51 | X | X |
| Comparative Examples 5 | 7 min | 2.3 | 1.3 | ○ | ○ |
| Comparative Examples 6 | 8 min | 1.2 | 0.3 | X | X |
| Comparative Examples 7 | 6 min | 1.9 | 0.82 | X | ○ |
| Comparative Examples 8 | 7 min | 1.3 | 0.13 | X | X |
| Comparative Examples 9 | 9 min | 1.9 | 0.21 | X | ○ |
| Comparative Examples 10 | 10 min | 1.5 | 0.23 | X | X |
| Comparative Examples 11 | 8 min | 1.8 | 0.15 | ○ | X |

The coating protecting films manufactured with the compositions of the Examples were all excellent in physical properties. Comparative Examples 1 to 4 and 6 to 10 had poor solvent resistance, and Comparative Examples 3 to 4, 6, 8, 10, and 11 had poor water resistance. Comparative Example 5 exceeded the residual amount.

Hereinafter, various embodiments of the present disclosure will be described.
(1) A composition for a coating protecting film, comprising an acrylic emulsion resin, a polyurethane dispersion, and a polyolefin resin, wherein the acrylic emulsion resin has a weight average molecular weight of 200,000 to 300,000 g/mol and a glass transition temperature of 50 to 80°C, and the polyurethane dispersion has a weight average molecular weight of 40,000 to 60,000 g/mol and a glass transition temperature of -70 to -20°C.
(2) The composition for a coating protecting film, wherein the acrylic emulsion resin has an acid value of 3 to 6 mg KOH/g and a viscosity at 25°C of 30 to 100 cps.
(3) The composition for a coating protecting film, wherein the polyolefin resin has a weight average molecular weight of 70,000 to 90,000 g/mol and a viscosity at 25°C of 10 to 250 cps.
(4) The composition for a coating protecting film, comprising 30 to 50% by weight of the acrylic emulsion resin, 20 to 30% by weight of the polyurethane dispersion, and 25 to 40% by weight of the polyolefin resin, based on the total weight of the composition for a coating protecting film.
(5) A coating protecting film manufactured by curing the composition for a coating protecting film according to any one of items (1) to (4).

## Claims

1. A composition for a coating protecting film, comprising an acrylic emulsion resin, a polyurethane dispersion, and a polyolefin resin, wherein the acrylic emulsion resin has a weight average molecular weight of 200,000 to 300,000 g/mol and a glass transition temperature of 50 to 80°C, and the polyurethane dispersion has a weight average molecular weight of 40,000 to 60,000 g/mol and a glass transition temperature of -70 to -20°C.

2. The composition for a coating protection film of claim 1, wherein the acrylic emulsion resin has an acid value of 3 to 6 mg KOH/g and a viscosity at 25°C of 30 to 100 cps.

3. The composition for a coating protecting film of claim 1, wherein the polyolefin resin has a weight average molecular weight of 70,000 to 90,000 g/mol and a viscosity at 25°C of 10 to 250 cps.

4. The composition for a coating protecting film of claim 1, comprising 30 to 50% by weight of the acrylic emulsion resin, 20 to 30% by weight of the polyurethane dispersion, and 25 to 40% by weight of the polyolefin resin, based on the total weight of the composition for a coating protecting film.

5. A coating protecting film manufactured by curing the composition for a coating protecting film according to any one of claims 1 to 4.
